(19) Europäisches Patentamt
European Patent Office
Office européen des brevets

(11) **EP 2 325 479 B1**

(12) **EUROPEAN PATENT SPECIFICATION**

(45) Date of publication and mention
of the grant of the patent:
**07.08.2019 Bulletin 2019/32**

(51) Int Cl.:
*F03D 7/02* *(2006.01)*    *F03D 7/04* *(2006.01)*
*F03D 9/00* *(2016.01)*    *H02P 9/10* *(2006.01)*

(21) Application number: **09769386.5**

(22) Date of filing: **24.06.2009**

(86) International application number:
**PCT/ES2009/070244**

(87) International publication number:
**WO 2009/156540 (30.12.2009 Gazette 2009/53)**

(54) **METHOD FOR CONTROLLING A WIND TURBINE**

VERFAHREN ZUR STEUERUNG EINER WINDTURBINE

PROCEDE DE COMMANDE D'UNE TURBINE EOLIENNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.06.2008 ES 200801911**

(43) Date of publication of application:
**25.05.2011 Bulletin 2011/21**

(73) Proprietor: **Ingeteam Power Technology, S.A.**
**48170 Zamudio (Bizkaia) (ES)**

(72) Inventors:
• **MAYOR LUSARRETA, Jesús**
**E-31621 Sarriguren (Navarra) (ES)**
• **GARMENDIA OLARREAGA, Iker**
**48170 Zamudio (Bizkaia) (ES)**
• **ACEDO SÁNCHEZ, Jorge**
**E-31621 Sarriguren (Navarra) (ES)**
• **CÁRCAR MAYOR, Ainhoa**
**E-31621 Sarriguren (Navarra) (ES)**
• **SOLÉ LÓPEZ, David**
**E-31621 Sarriguren (Navarra) (ES)**
• **SIMÓN SEGURA, Susana**
**E-31621 Sarriguren (Navarra) (ES)**
• **ZABALETA MAEZTU, Mikel**
**E-31621 Sarriguren (Navarra) (ES)**
• **ELORRIAGA LLANOS, Josu**
**48170 Zamudio (Bizkaia) (ES)**

(74) Representative: **Igartua, Ismael et al**
**Galbaian S. Coop.**
**Garaia Parke Teknologikoa**
**Goiru Kalea 1**
**20500 Arrasate-Mondragón (ES)**

(56) References cited:
**EP-A2- 0 275 953        EP-A2- 1 561 946**
**WO-A1-2004/025823    WO-A1-2004/070936**
**WO-A2-2007/077001    US-A1- 2007 216 164**
**US-B1- 6 239 511**

**Description**

OBJECT OF THE INVENTION

The present invention relates to a method for controlling the power of a wind turbine, particularly of those comprising a doubly-fed generator, usually connected to an electrical network.

BACKGROUND OF THE INVENTION

In recent years the number of aerogenerators and wind farms connected to the electrical network has significantly increased. For this reason, the level of demand for these machines has increased by listing e number of performance requirements to improve the efficiency of the aerogenerator preventing mechanical stresses and obtaining e quick response in the presence of disturbances in the electrical network.

Currently, there are different solutions in the state of the art that meet the established performance requirements when failures in the network occur.

For example, the invention EP098455261 (Alstom) describes the connection of some resistors to the stator such that the actuation on these resistors, when the machine has been disconnected from the electrical network, for example following the occurrence of a failure therein, enables the turbine and generator voltage to be controlled.

The patent application WO 2004/070936 A1 (Vestas), describes a similar system applied to a doubly-fed wind turbine wherein the capacity of the frequency converter tor contributing to the short-circuit current for the electrical network during failures is claimed. During the failure, the turbine speed is controlled by dissipating the power in the impedances connected in the stator and, in the chopper resistor connected in the continuous Intermediate circuit of the converter. In this sense, the power transmitted by the rotor of the generator to the continuous bus through the converter, during deceleration or the generator, can be dissipated in the chopper of the continuous bus or shifted to the network, in case there is voltage therein.

The proposed invention describes an alternative for machines with at least one power unit formed by:

- at least one first electronic converter connected to the rotor of the generator,
- at least one second electronic converter capable of supplying or dissipating the power which said rotor of the generator is using or producing,
- at least one continuous bus.

With the proposed method it is possible to control the power of the rotor by modifying the synchronization speed of the asynchronous generator when it is disconnected from the electrical network.

DESCRIPTION OF THE INVENTION

In a doubly fed machine the rotor power $(P_r)$ depends on the sliding (s) of the asynchronous machine and the power extracted from the stator $(P_s)$:

$$P_r = s * P_s$$

Said sliding is defined as:

$$s = \frac{\omega r - \omega s}{\omega s},$$

Wherein:

$\omega_r$ = rotor speed.
$\omega_s$ = synchronization speed.

Synchronization speed is determined by the frequency of the electrical network, as long as the asynchronous generator is coupled lo the electrical network.

In the present invention, in cases involving the stator disconnection of the asynchronous generator from the network, it is claimed a method by which rotor power is controlled regardless of its rotor speed. This is achieved by modifying the synchronization speed of (he generator. it is known that the ratio between speed and frequency responses lo the following formula:

$$\omega = \frac{60 * f}{p},$$

Wherein:

$\omega$ = machine speed in revolutions/minute (r.p.m.).
$f$ = electrical frequency.
p '= number of pole pairs in the generator.

The frequencies of the stator and rotor are related according to the following formula:

$$fs = fr + fw$$

fs = frequency of the currents in the stator (frequency corresponding to the synchronization speed)
$fr$ = frequency of the currents in the rotor
$fw$ = electrical frequency corresponding to the rotor speed

The previous ratio shows how the frequency fs is imposed by the electrical network (50 - 60 Hz) when the generator Is coupled to the network, which means (hat the frequency of the currents in the rotor will be set by the speed according to the following expression:

$$fr = fs - fw$$

When the generator is decoupled, the frequency in the stator (fs) is not imposed by the electrical network and it only depends on the frequency of the currents in the rotor and on the rotor speed. Therefore, by controlling the frequency of the currents in the rotor it is possible to control the sliding of the asynchronous generator regardless of the rotor speed. This allows having a total control on the rotor power by only using the first electronic converter connected to the rotor of the generator. Consequently, even in conditions in which the second electronic converter is deactivated, the continuous bus voltage can be maintained within the established limits without the need of a chopper in the continuous bus.

The invention consists of a method for controlling a wind turbine for generators that are connected to the electrical network and are of asynchronous type with wound rotor, having at least one first electronic converter connected to the rotor and at least one load capable of being connected to the stator, so that it foresees the stator disconnection from the electrical network and also the connection of the load lo the stator is carried out, where it is required that the stator is disconnected from the electrical network. The novelty of the invention is the incorporation of an operating mode consisting of modifying the frequency of the currents in the rotor of the generator, thus controlling the power flow between the rotor of the generator and the first electronic converter. during the stator disconnection of the generator from the electrical network and its connection to the resistors.

In addition, the power flow between the rotor of the generator and the first electronic converter can be established so that the continuous bus voltage of the power unit is controlled, so that if said voltage decreases the power extracted from the rotor of the generator increases, and vice versa. The objective of said control is to maintain the bus voltage within an operating range.

BRIEF DESCRIPTION OF THE DRAWINGS

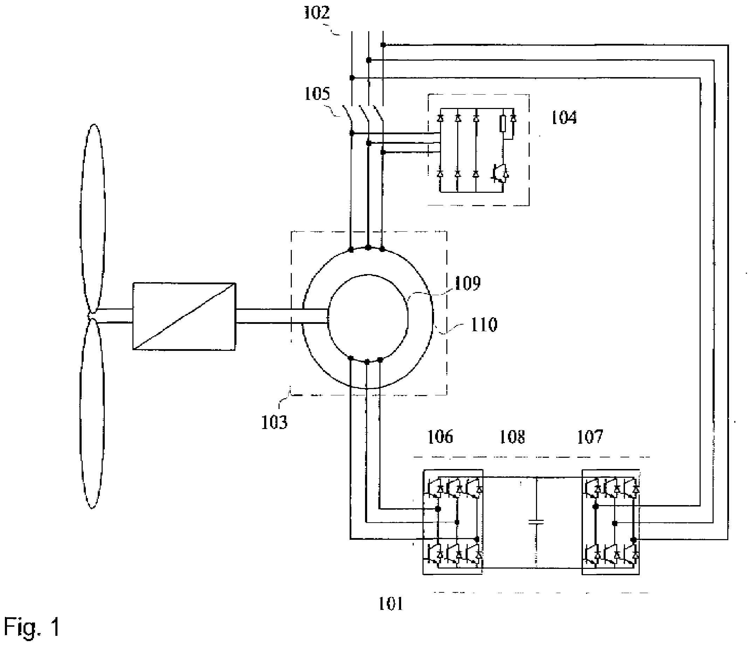

Figure 1. - Shows a topology wherein the method of the described invention can be applied.

DESCRIPTION OF ONE OR SEVERAL EMBODIMENTS OF THE INVENTION

A description of examples of the invention is now made, with reference to Figure 1.

The present invention describes a method for controlling a wind turbine during its disconnection from the electrical network (102) tor asynchronous-type generators (103) with wound rotor (109) having at least one power unit (101) connected to the rotor (109) of the generator and comprising the following conventional phases:

- Detecting inlet conditions in the isolated operating mode. By isolated operating mode is understood as the situation in which the stator (110) of the generator is decoupled from the electrical network (102) during gaps in the electrical network voltage.
- Disconnecting the stator (110) from the electrical network (102) when the isolated operating mode is required, by opening the contactor (105) connecting the stator (110) to the electrical network (102).
- Controlling a first electronic converter (106) of the power unit (101), by which it is connected to the rotor (109) of the generator to maintain the voltage module in the stator of the generator at the desired value, for example, its nominal value.
- Connecting a load (104) lo the stator and modulating the consumption of said load (104) to control the power generated by the stator (110) and thus control the machine speed. This load may be of resistive-type.
- Detecting output conditions in the isolated operating mode, when conditions necessary for the operation coupled to the electrical network are given.
- Synchronizing and connecting the stator of the generator to the electrical network (102), by switching off the contactor (105).
- Disconnecting the resistors (104).

The novelty of the invention is that the previous phases are carried out maintaining, at all times, the control of the frequency of the currents in the rotor generated by the first electronic converter (106) of the power unit (101) connected to the rotor of the generator. One of the advantages of this method is to allow the control and maintenance of the continuous bus (108) voltage, Since the control of the frequency of the currents in the rotor is maintained at all times, a preferred embodiment of the invention may not be provided with the braking chopper located in the continuous bus (108) of the power unit (101), thus preventing the addition of further elements.

In a preferred embodiment, the second electronic converter (107) connected to the electrical network (102) can be deactivated during the disconnection period, for example, in case of a gap in the mains voltage, the semiconductors of the second electronic converter (107) might stop switching since by having no mains voltage it would not be possible to exchange power between the continuous bus and the electrical network.

Claims

1. Method for controlling a wind turbine during gaps in an electrical network voltage, applied to generators (103) connected to the electrical network (102) of the asynchronous type with wound rotor (109) and a stator (110), having at least one power unit (101) with at least one first electronic converter (106) connected to the rotor (109) of the generator (103), at least one second electronic converter (107) capable of supplying or dissipating the power which said rotor (109) of the generator (103) is using or producing, and at least one continuous bus (108), and at least a load (104) capable of being connected to the stator (110), and comprising the stator disconnection from the electrical network (102) and its connection to the load (104) during gaps in the electrical network voltage; **characterized in that,** during the stator disconnection of the generator (103) from the electrical network (102) and its connection to the load (104), it comprises varying the frequency of the currents in the rotor (109) generated by the first electronic converter (106) connected to the rotor (109) of the generator (103) in order to control the power flow between the rotor of the generator (103) and the first electronic converter (106).

2. Method for controlling a wind turbine during gaps in an electrical network voltage according to claim 1, comprising maintaining the continuous bus voltage within a working range by controlling the power flow between the rotor of the generator (103) and the first electronic converter (101).

3. Method for controlling a wind turbine during gaps in an electrical network voltage according to claim 1 or 2, wherein the second electronic converter (107) connected to the electrical network (102) is deactivated during the stator disconnection.

**Patentansprüche**

1. Verfahren zur Steuerung einer Windturbine während Spalte in einer elektrischen Netzspannung, angewendet auf Generatoren (103), welche mit dem elektrischen Netz (102) verbunden sind, des asynchronen Typs mit gewickeltem Rotor (109) und einem Stator (110), aufweisend mindestens eine Leistungseinheit (101) mit mindestens einem ersten elektronischen Converter (106), welcher mit dem Rotor (109) des Generators (103) verbunden ist, mindestens einem zweiten elektronischen Converter (107), welcher in der Lage ist, den Strom, welcher der genannte Rotor (109) des Generators (103) verwendet oder erzeugt, zuzuführen oder abzuleiten, und mindestens einem durchgehenden Bus (108), und mindestens eine Ladung (104), welche in der Lage ist, mit dem Stator (110) verbunden zu werden, und umfassend die Trennung des Stators vom elektrischen Netz (102) und dessen Verbindung mit der Ladung (104) während Spalte in der elektrischen Netzspannung; **dadurch gekennzeichnet, dass**, während der Trennung des Stators des Generators (103) vom elektrischen Netz (102) und dessen Verbindung mit der Ladung (104), es die Änderung der Frequenzen der Ströme im Rotor (109), erzeugt vom ersten elektronischen Converter (106), welcher mit dem Rotor (109) des Generators (103) verbunden ist, umfasst, um den Leistungsfluss zwischen dem Rotor des Generators (103) und dem ersten elektronischen Converter (106) zu steuern.

2. Verfahren zur Steuerung einer Windturbine während Spalte in einer elektrischen Netzspannung nach Anspruch 1, welches das Aufrechterhalten der durchgehenden Busspannung innerhalb eines Arbeitsbereiches umfasst, indem der Leistungsfluss zwischen dem Rotor des Generators (103) und dem ersten elektronischen Converter (101) gesteuert wird.

3. Verfahren zur Steuerung einer Windturbine während Spalte in einer elektrischen Netzspannung nach Anspruch 1 oder 2, wobei der zweite elektronische Converter (107), welcher mit dem elektrischen Netz (102) verbunden ist, während der Trennung des Stators abgeschaltet wird.

**Revendications**

1. Procédé de commande d'éolienne pendant des trous dans une tension de réseau électrique, appliqué aux générateurs (103) connectés au réseau électrique (102) de type asynchrone avec un rotor bobiné (109) et un stator (110), ayant au moins une unité de puissance (101) avec au moins un premier convertisseur électronique (106) connecté au rotor (109) du générateur (103), au moins un deuxième convertisseur électronique (107) apte à fournir ou dissiper la puissance que ledit rotor (109) du générateur (103) est en train d'utiliser ou de produire, et au moins un bus continu (108), et au moins une charge (104) apte à être connectée au stator (110), et comprenant la déconnexion du stator du réseau électrique (102) et sa connexion à la charge (104) pendant les trous dans la tension de réseau électrique; **caractérisé en ce que,** pendant la déconnexion du stator (103) du réseau électrique (102) et sa connexion à la charge (104), il comprend la variation du la fréquence des courants dans le rotor (109) généré par le premier convertisseur électronique (106) connecté au rotor (109) du générateur (103) afin de commander le débit de puissance entre le rotor du générateur (103) et le premier convertisseur électronique (106).

2. Procédé de commande d'une éolienne pendant des trous dans une tension de réseau électrique selon la revendication 1, comprenant le maintien de la tension de bus continu dans une plage de fonctionnement commandant le débit de puissance entre le rotor du générateur (103) et le premier convertisseur électronique (101).

**3.** Procédé de commande d'une éolienne pendant des trous dans une tension de réseau électrique selon la revendication 1 ou 2, dans lequel le second convertisseur électronique (107) connecté au réseau électrique (102) est désactivé pendant la déconnexion du stator.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 098455261 A

- WO 2004070936 A1